Europäisches Patentamt

European Patent Office

Office européen des brevets

(11) Veröffentlichungsnummer: **0 133 944**
**A1**

(12) **EUROPÄISCHE PATENTANMELDUNG**

(21) Anmeldenummer: 84108537.6

(22) Anmeldetag: 19.07.84

(51) Int. Cl.⁴: **F 16 D 3/68**

(30) Priorität: 23.07.83 DE 3326620

(43) Veröffentlichungstag der Anmeldung: **13.03.85**
**Patentblatt 85/11**

(84) Benannte Vertragsstaaten: **BE FR GB IT**

(71) Anmelder: **A. Friedrich Flender GmbH & Co. KG,**
**Alfred-Flender-Strasse 77 Postfach 139, D-4290 Bocholt**
**(DE)**

(72) Erfinder: **Sieverding, Viktor, Akazienweg 20,**
**D-4290 Bocholt (DE)**
Erfinder: **Naescher, Jürgen, Dr.-Ing., Hemdener**
**Weg 140, D-4290 Bocholt (DE)**

(54) **Elastische, flexible Wellenkupplung.**

㉗ Die Erfindung bezieht sich auf eine Wellenkupplung, bei der die elastischen Elemente (1) aus zelligem Polymer-Werkstoff bestehen. Im Gegensatz zu den gebräuchlichen kompakten homogenen Polymer-Werkstoffen ist der zellige Werkstoff volumenkompressibel, so daß große Verdrehwinkel ermöglicht werden. Gleichzeitig wird durch die zellige Struktur der elastischen Elemente eine gute Innenkühlung derselben sichergestellt.

## Elastische, flexible Wellenkupplung

Die Erfindung betrifft eine elastische, flexible Wellenkupplung nach dem Oberbegriff des Anspruches 1, so wie sie
in der Technik zur Verbindung zweier Wellen vielfältig
Verwendung finden. Diese dienen der flexiblen Verbindung
der Wellen, der drehelastischen Abfederung von Drehmomentstößen und dem Abbau von Schwingungen.

Im Stand der Technik sind eine Vielzahl derartiger Kupplungen bekannt. Sie besitzen elastische Elemente, die aus
kompaktem, elastischen, homogenen Polymer-Werkstoff oder aus
Metall bestehen. Kupplungen dieser Art haben eine Reihe
von Nachteilen. Die elastischen Elemente, die im wesentlichen
die Eigenschaften einer Kupplung bestimmen, sind nach
ihrer Elastizität, Belastbarkeit und Dämpfung zu beurteilen.
Dabei stehen diese Kriterien untereinander in Abhängigkeit,
so daß, wenn ein Unterscheidungsmerkmal verbessert wird,
die anderen sich verschlechtern. So weisen die bekannten
Kupplungen mit ihren elastischen Elementen nur mäßige
Gesamtergebnisse auf. Es läßt sich z.B. die Elastizität
von Elementen aus Polymer-Werkstoff durch die Art der
Beanspruchung (Druck, Schub, Zug) der Elemente oder durch
deren Erstreckung in Beanspruchungsrichtung sowie durch die
Shore-Härte beeinflussen. Diese Variationen der elastischen
Elemente setzen aber gleichzeitig ihrer Belastbarkeit enge
Grenzen und führen in der Regel bei einer Änderung der
Elastizität zu einer Änderung der Kupplungsgröße. Besonders
bei hoher Elastizität sinkt die zulässige Beanspruchung
stark ab, so daß hochelastische Wellenkupplungen bisher
sehr groß gebaut werden mußten. Setzt man statt der elastischen Polymer-Werkstoffe elastische Elemente aus Metall ein,
so erhält man zwar Kupplungen, die in weiten Bereichen in
ihrer Elastizität zu beeinflussen sind, verliert jedoch damit
eine wesentliche Eigenschaft der elastischen Polymer-Werkstoffe,
nämlich das gute Dämpfungsverhalten.

Das für Antriebe in der Regel erwünschte gute Dämpfungsverhalten von Wellenkupplungselementen aus bekannten
elastischen Polymer-Werkstoffen setzt der Belastbarkeit
dieser Elemente wiederum enge Grenzen. Da die Dämpfungsenergie innerhalb der Elemente in Wärme umgesetzt wird
und die Wärmeleitfähigkeit solcher Materialien sehr schlecht
ist, muß bei größeren Schwingungsausschlägen mit entsprechender Erwärmung bis hin zur Zerstörung der Elemente gerechnet
werden. Dieses Problem tritt besonders stark bei hochelastischen Kupplungen auf, da hier die elastischen Verlagerungen
besonders groß sind.

Aufgabe der Erfindung ist es, eine bezüglich des übertragbaren
Drehmomentes kleine und einfache Kupplung zu bauen, die
einen großen und in weiten Bereichen variierbaren Verdrehwinkel zur Aufnahme von Lastspitzen und Stößen ohne Änderung
der zulässigen Belastungswerte zuläßt und daß das Dämpfungsverhalten in weiten Bereichen beeinflußbar ist, ohne daß
sich die elastischen Elemente so erwärmen, daß die Funktion
der Kupplung gefährdet wird.

Diese Aufgabe wird, wie im Kennzeichen des Anspruches 1
angegeben, gelöst. Die vorgeschlagenen elastischen Elemente
besitzen eine hohe elastische Verformbarkeit. Sie sind
im Gegensatz zu den bekannten elastischen Elementen volumenkompressibel. Dies führt dazu, daß für die elastischen
Elemente kein Stauraum vorgesehen werden muß, was der Baugröße zugute kommt. Außerdem erwärmen sie sich verhältnismäßig gering. Dadurch, daß die elastischen Elemente komprimierbar sind, also im Betrieb ständig ihre Struktur und
Form ändern, wird die Wärmeabfuhr begünstigt. Die Kompressibilität der elastischen Elemente kann durch das Herstellverfahren beeinflußt werden.

Die zellige Struktur des Werkstoffes der elastischen Elemente
hat Ähnlichkeit mit einem Schwamm. Ein Schwamm besitzt eine
Vielzahl von kleinen Räumen, die alle oder teilweise miteinander in Verbindung stehen. Diese Räume besitzen insgesamt eine große Oberfläche. Da sie mit einem Medium gefüllt sind,
welches durch ständige Formänderung in Bewegung gehalten
wird, erfolgt eine schnelle und gute Wärmeabfuhr. Dabei
ist die Wärmeabfuhr besonders gut bei großer Schwingungsamplitude.

Durch das allseitige Umschließen der elastischen Elemente
wird der Bauraum besser genutzt und wird eine höhere
Auslastung und verbesserte Lebensdauer erreicht. Der Kontakt mit den Wänden dient gleichzeitig einer besseren
Kühlung und vermeidet unerwünschte Deformationen.

Zur Veränderung der Kennlinie der Kupplung und weiteren
Verringerung des Bauvolumens lassen sich die elastischen
Elemente vorspannen. Dadurch kann die Kupplung auch spielfrei
eingestellt werden.

Um bei unterschiedlichen Drehrichtungen unterschiedliche
Kennlinien zu erhalten, können abwechselnd unterschiedlich
große elastische Elemente Anwendung finden. So kann für eine
bestimmte Drehrichtung ein besonders großer Verdrehwinkel
ermöglicht werden.

Die Kennlinie einer Kupplung kann auch dadurch verändert
werden, daß elastische Elemente unterschiedlicher Dichte
eingesetzt werden. Eine geringere Dichte ergibt eine höhere
Elastizität, ohne daß dabei die Belastbarkeit der elastischen
Elemente abnimmt, was einen besonderen Vorzug gegenüber
den bekannten elastischen Elementen darstellt. Natürlich
können auch die elastischen Elemente einer Kupplung mit
unterschiedlicher Dichte ausgeführt werden.

Ebenso können in einer Kupplung elastische Elemente unterschiedlicher Wirkhöhe zum Einsatz kommen, die nacheinander
bzw. mit unterschiedlicher Belastung an der Drehmomentübertragung teilhaben und somit die Kennlinie beeinflussen.

Die Dämpfung einer erfindungsgemäßen Kupplung läßt sich
auch dadurch beeinflussen, indem das Medium in den Zellen
der elastischen Elemente verändert wird.
So kann z.B. anstatt Luft Öl vorgesehen werden. Durch
die Zähigkeit und Inkompressibilität des Mediums Öl verändert sich die Charakteristik der elastischen Elemente
und damit auch das der Kupplung. Je nach Füllungsgrad
ergeben sich andere Werte.

Trotz der Kompressibilität der elastischen Elemente kann
die Kupplung nahezu frei von axialen Kräften gehalten werden,
indem die Stirnflächen, an welchen sich die elastischen
Elemente in axialer Richtung abstützen, an einer Kupplungshälfte befestigt werden.

Nachfolgend wird der Erfindungsgegenstand an Hand der
Zeichnungen als erläuternde Ausführungsbeispiele näher
beschrieben. Es zeigen

Fig. 1      einen Querschnitt durch eine Kupplung und der
            elastischen Elemente,

Fig. 2      einen Längsschnitt durch eine Kupplung

Fig. 3      einen Längsschnitt durch eine Kupplung, bei der
            die elastischen Elemente sich in einem hermetisch
            abgeschlossenen Raum befinden,

Fig. 4      ein elastisches Element in Vorderansicht,

Fig. 5      ein elastisches Element in Seitenansicht.

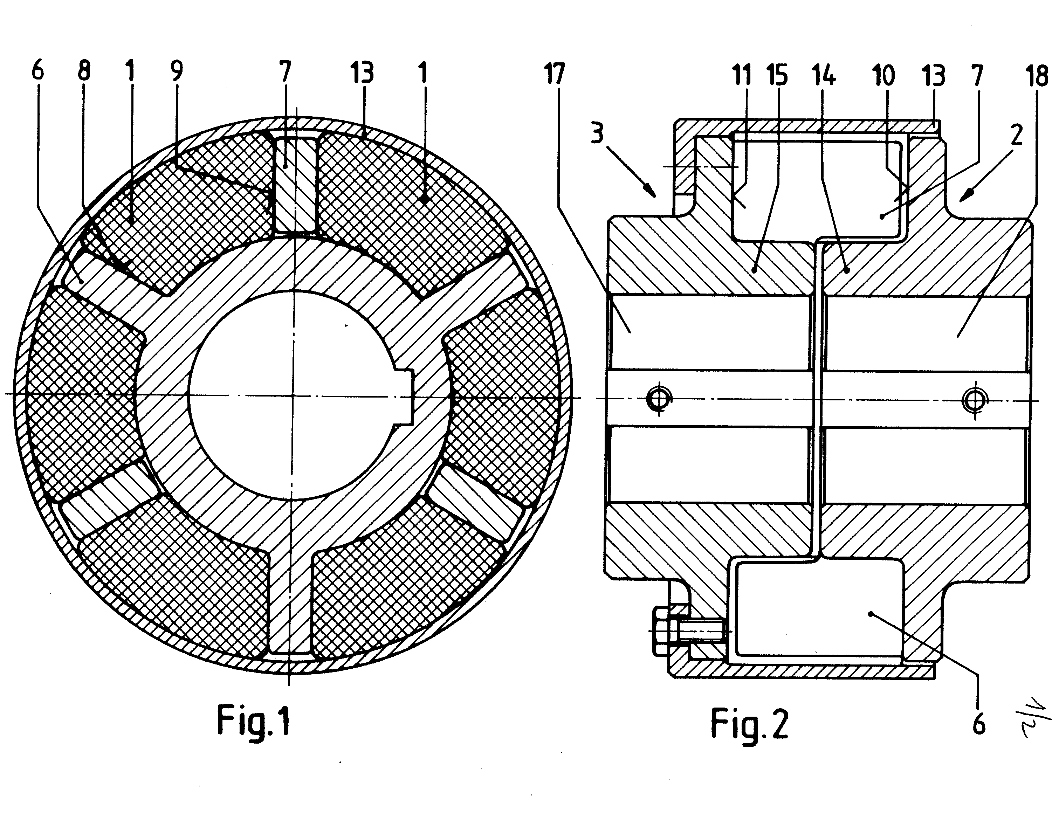

Die in den Figuren 1 und 2 dargestellte Kupplung dient einer
flexiblen elastischen Verbindung zweier Wellen. Das Drehmoment wird über die Bohrung 18 in die Kupplungshälfte 2
eingeleitet und über die Flächen 8 der Klauen 6 auf die
elastischen Elemente 1 übertragen. Analog dazu erfolgt der
Abtrieb über die Flächen 9 der Klauen 7 zur Bohrung 17 der
Kupplungshälfte 3. Die elastischen Elemente 1 sind in Kammern angeordnet, die von den Flächen 8, 9, den Stirnflächen 10, 11, den Nabenvorsprüngen 14, 15 und der Außenhülse 13 gebildet werden. Die elastischen Elemente bestehen aus zelligem Polymer-Werkstoff. Infolge der Zellstruktur sind sie volumenkompressibel. Deshalb ermöglichen sie große elastische Verformungen bei kleinem Bauraum. Die Dämpfung wird zum einen durch den Polymer-Werkstoff selber und zum anderen durch Verschiebung und Drosselung des Mediums in den Zellen bewirkt. Durch die Verschiebung der Zelleninhalte erfolgt aber gleichzeitig ein Wärmetransport, so daß die elastischen Elemente auch im Innern sich verhältnismäßig wenig erwärmen. Deshalb sind derartige Kupplungen sehr leistungsfähig.

Die Kompressibilität der elastischen Elemente erlaubt nicht nur ein völliges Ausfüllen der Kammern für die elastischen Elemente, sondern darüber hinaus ein Vorspannen der elastischen Elemente, wodurch derartige Kupplungen besonders klein gebaut werden können.

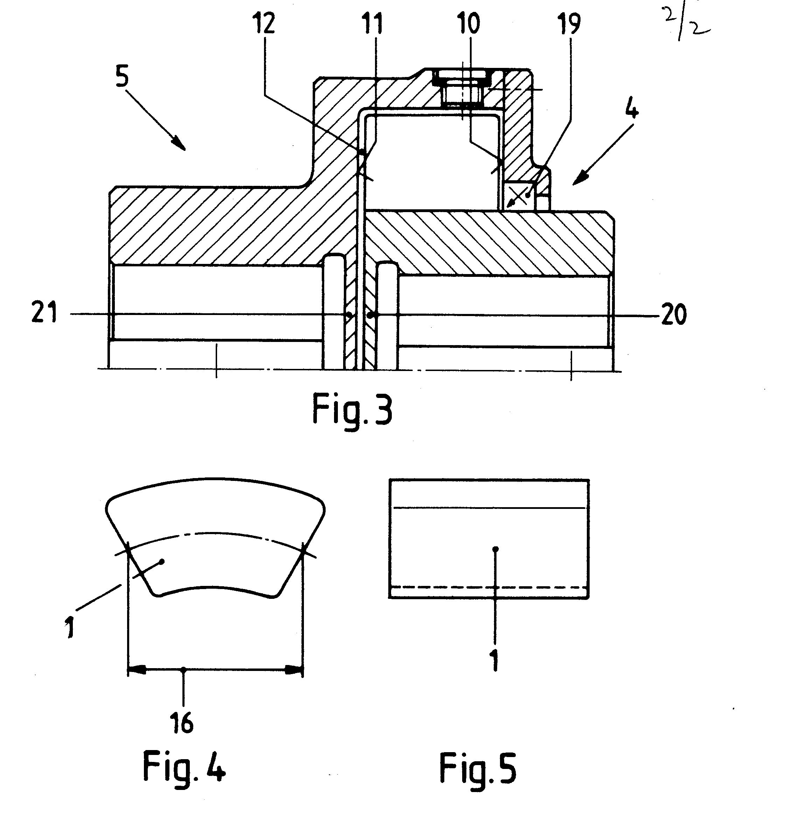

Durch die Wahl unterschiedlicher Wirkhöhen 16 (Fig. 4) kann die Charakteristik einer Kupplung beeinflußt werden. Das gleiche gilt auch für die Wahl der Dichte des Werkstoffes, aus dem die elastischen Elemente gefertigt werden. Somit ergeben sich viele Variationsmöglichkeiten, ohne die äußeren Abmessungen einer Kupplung verändern zu müssen.

Die Zellen der elastischen Elemente sind mit einem Medium gefüllt, z.B. mit Luft oder Gas. Da deren Struktur einem Schwamm ähnlich ist, können die Zellen auch mit einer Flüssigkeit, z.B. Öl, gefüllt werden. Dadurch verändert sich natürlich die Kompressibilität, aber auch der Wärmetransport und die Dämpfung. Diesen Vorteil kann man sich nutzbar machen, indem man die elastischen Elemente in einem hermetisch geschlossenen Raum 12 (Fig. 3) anordnet. Die in Fig. 3 dargestellte Kupplung  unterscheidet sich im wesentlichen von der nach Fig. 2 durch den Dichtring 19 und die Böden 20 und 21, so daß der Raum 12 von der Außenwelt abgeschlossen ist und mit Flüssigkeit oder dgl. gefüllt werden kann.

Die in Fig. 3 dargestellte Kupplung stellt auch ein Beispiel für eine Kupplung ohne axiale Rückstellkraft dar. Da die Stirnflächen 10, 11, die die elastischen Elemente in Axialrichtung begrenzen, nur an der Kupplungshälfte 5 befestigt sind, können aus der Kompression der elastischen Elemente auf die Kupplungshälfte 4 keine Axialkräfte wirken.

Durch die Kompression der elastischen Elemente legen sich diese allseitig an den Kupplungswandungen an. Hierdurch entsteht ein inniger Kontakt zum Kupplungswerkstoff, der häufig aus Metall besteht, so daß die Wärmeableitung auch hierdurch begünstigt wird.

0133944

Benennungen
-----------

| | |
|---|---|
| 1 | elastisches Element |
| 2 | Kupplungshälfte |
| 3 | " |
| 4 | " |
| 5 | " |
| 6 | Klauen (Nocken) |
| 7 | " |
| 8 | Fläche (der Klaue 6) |
| 9 | Fläche (der Klaue 7) |
| 10 | Stirnfläche |
| 11 | " |
| 12 | hermetisch abgeschlossener Raum |
| 13 | Außenhülse |
| 14 | Nabenvorsprung |
| 15 | " |
| 16 | Wirkhöhe |
| 17 | Bohrung |
| 18 | " |
| 19 | Dichtring |
| 20 | Boden |
| 21 | " |

0133944

Patentansprüche
---------------

1. Elastische, flexible Wellenkupplung mit am Umfang
   angeordneten Kupplungselementen, die mittels Druck-
   und/oder Schubbelastung eine Drehmomentübertragung von
   der einen Kupplungshälfte auf die andere durch Kontakt
   mit den Kupplungshälften bewirken, dadurch gekennzeichnet, daß die elastischen Elemente (1) aus zelligem
   Polymer-Werkstoff bestehen.

2. Wellenkupplung nach Anspruch 1, dadurch gekennzeichnet,
   daß sich an den einander zugewandten Kupplungshälften
   (2, 3; 4, 5) Klauen (Nocken) (6, 7) befinden, die
   wechselweise ineinandergreifen und zwischen denen
   elastische Elemente (1) angeordnet sind.

3. Wellenkupplung nach Anspruch 1 oder 2, dadurch gekennzeichnet, daß die elastischen Elemente (1) allseitig
   anliegen, also außer an den Klauen (6, 7; 8, 9) auch
   an den Stirnflächen (10, 11), der Außenhülse (13) und
   den Nabenvorsprüngen (14, 15) anliegen und sich hieran
   abstützen.

4. Wellenkupplung nach Anspruch 3, dadurch gekennzeichnet,
   daß die elastischen Elemente (1) unter Last allseitig
   anliegen.

5. Wellenkupplung nach Anspruch 1, 2, 3 oder 4, dadurch
   gekennzeichnet, daß die elastischen Elemente (1) vorgespannt sind.

6. Wellenkupplung nach Anspruch 1, 2, 3, 4 oder 5, dadurch
   gekennzeichnet, daß jedes zweite elastische Element (1)
   die gleiche Wirkhöhe (16) besitzt, die elastischen
   Elemente abwechselnd aber unterschiedliche Wirkhöhen
   aufweisen.

7. Wellenkupplung nach Anspruch 2, dadurch gekennzeichnet, daß die elastischen Elemente in ihrer Wirkhöhe unterschiedlich gestaltet sind und nacheinander lastabhängig zum Einsatz kommen.

8. Wellenkupplung nach einem der Ansprüche, dadurch gekennzeichnet, daß die elastischen Elemente (1) untereinander unterschiedliche Dichte aufweisen.

9. Wellenkupplung nach einem der Ansprüche, dadurch gekennzeichnet, daß die elastischen Elemente (1) in einem hermetisch abgeschlossenen Raum (12) angeordnet sind und dieser ganz oder teilweise mit Flüssigkeit, wie z.B. Öl, gefüllt ist.

10. Wellenkupplung nach einem der Ansprüche, dadurch gekennzeichnet, daß die die elastischen Elemente (1) in Axialrichtung begrenzenden Stirnflächen (10, 11) mit nur einer Kupplungshälfte (5) fest verbunden sind.

11. Wellenkupplung nach Anspruch 1, dadurch gekennzeichnet, daß die elastischen Elemente (1) aus zelligem Polyurethan-Elastomer bestehen.

Fig.1

Fig.2

0133944
1/2

0133944
2/2

Fig. 3

Fig. 4

16

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 517 035  (A. JOHNSTON)<br>* Seite 2, Zeilen 20-28 * | 1 | F 16 D  3/68 |
| A | | 3-5 | |
| | --- | | |
| A | US-A-2 048 431  (V. DORGA)<br>* Seite 2, Zeilen 100-106; Figur 5 * | 1 | |
| | --- | | |
| A | GB-A- 832 092  (M. REICH) | | |
| | ----- | | |

**RECHERCHIERTE SACHGEBIETE (Int. Cl.4)**

F 16 D

Der vorliegende Recherchenbericht wurde für alle Patentansprüche erstellt.

| Recherchenort<br>DEN HAAG | Abschlußdatum der Recherche<br>31-10-1984 | Prüfer<br>BEGUIN C.P. |
|---|---|---|